# EUROPÄISCHE PATENTSCHRIFT

(11) **EP 2 342 506 B1**
(45) Veröffentlichungstag und Bekanntmachung des Hinweises auf die Patenterteilung: **30.09.2015**
(21) Anmeldenummer: 09736225.5
(22) Anmeldetag: 15.10.2009
(51) Int. Cl.: F24H 9/12, F28F 21/06, F28D 20/00

(54) **WARMWASSERSPEICHER**
HOT WATER TANK
RÉSERVOIR D'EAU CHAUDE

(30) Priorität: 22.10.2008 DE 102008043029
(43) Veröffentlichungstag der Anmeldung: 13.07.2011
(73) Patentinhaber: BSH Hausgeräte GmbH, 81739 München (DE)
(72) Erfinder: MAYER, Gebhard, 83278 Traunstein (DE); RADL, Mathias, 83374 Oderberg (DE)
(86) Internationale Anmeldenummer: PCT/EP2009/063512
(87) Internationale Veröffentlichungsnummer: WO 2010/046304

(56) Entgegenhaltungen:
- EP-A2- 0 841 522
- WO-A1-99/34153
- DE-C1- 3 739 118
- DE-U1- 8 410 639
- DE-U1- 20 318 637

## Beschreibung

Die Erfindung betrifft einen Warmwasserspeicher nach dem Oberbegriff des Anspruchs 1. Dokument DE 3 739 118 C1 offenbart die Merkmale des Oberbegriffs des Anspruchs 1.

Aus der Offenlegungsschrift DE 25 07 596 A1 ist ein Warmwasserspeicher bekannt. Der Warmwasserspeicher umfasst einen zylindrischen Stahlmantelbehälter mit einem wannenförmigen Boden und einem dem Boden gegenüberliegenden Öffnungshals, dessen Durchmesser geringer als der Durchmesser des zylindrischen Teils des Behälters ist. Am freien Ende des Öffnungshalses ist ein Ringflansch vorgesehen, der mit einem kreisförmigen Flanschdeckel mittels Bolzen verbunden werden kann, wodurch der Stahlmantelbehälter verschließbar ist.

Die Auslegeschrift DE 1 160 998 zeigt einen Warmwasserspeicher mit einer Flanschöffnung im Wasserbehälter, die durch einen sämtliche Systemkomponenten tragenden Deckel und eine zwischengelegte Dichtung verschlossen ist, und mit einer dehnbaren Hülle aus korrosionsfestem und hitzebeständigem Werkstoff in dem Wasserbehälter.

Aufgabe der Erfindung ist es, einen Warmwasserspeicher bereitzustellen, der bei einem einfachen und kostengünstigen Aufbau eine einfache Montage oder Demontage ermöglicht.

Diese Aufgabe wird erfindungsgemäß mit den Merkmalen des Patentanspruchs 1 gelöst.

Bei einem erfindungsgemäßen Warmwasserspeicher ist der Flanschdeckel über einen Bajonettverschluss mit dem Grundbehälter verbindbar. In vorteilhafter Weise ist hierdurch eine schnelle Montage und Demontage des Warmwasserspeichers möglich. Insbesondere kann auf jegliche Werkzeuge zum Schließen oder Öffnen des Warmwasserspeichers verzichtet werden.

Erfindungsgemäß besteht der Grundbehälter aus Kunststoff. Hierdurch ergibt sich in vorteilhafter Weise eine gute Beständigkeit des Warmwasserspeichers gegen Korrosion. Erfindungsgemäß besteht der Flanschdeckel aus Edelstahl. Aufgrund der Ausführung des Grundbehälters in Kunststoff wird auf einfache Weise ein Verrosten des Edelstahlflanschdeckels durch eine mögliche Kontaktkorrosion vermieden.

Vorzugsweise weist zur Ausbildung des Bajonettverschlusses der Grundbehälter einen Behälterhals mit Aussparungen und der Flanschdeckel Vorsprünge auf, wobei die Vorsprünge des Flanschdeckels in die Aussparungen des Grundbehälters einführbar sind. Hierdurch ist auf einfache und kostengünstige Weise ein Bajonettverschluss realisiert, indem vorhandene Bauteile als Teil des Bajonettverschlusses verwendet werden.

Bevorzugt weist der Warmwasserspeicher eine Arretiereinrichtung auf, welche dazu vorgesehen ist, den Flanschdeckel am Grundbehälter gegen Drehen zu sichern. In vorteilhafter Weise ist hierdurch der Flanschdeckel auf konstruktiv einfache Weise gegen eine unbeabsichtigte Drehung und ein dadurch mögliches axiales Herausfallen gesichert.

In einer vorteilhaften Ausgestaltung handelt es sich bei den Aussparungen des Behälterhalses um nach oben offene Ausbrüche, welche in eine zumindest teilweise am Innenumfang des Behälterhalses umlaufende Nut münden. In einer weiteren vorteilhaften Ausgestaltung handelt es sich bei den am Flanschhals vorgesehenen Vorsprüngen um sich radial nach außen erstreckende Nasen. Die Ausgestaltung des Bajonettverschlusses ermöglicht eine einfache Handhabung des Flanschdeckels beim Verschließen des Grundbehälters, da nur die Vorsprünge des Flanschdeckels in die Ausbrüche des Behälterhalses einzuführen sind und anschließend der Flanschdeckel durch einfaches Drehen in seiner Schließstellung gegenüber dem Grundbehälter gesichert ist.

Vorzugsweise handelt es sich bei der mindestens einen Systemkomponente um eine Zulaufeinheit für zu erwärmendes Wasser und/oder eine Heizeinrichtung und/oder eine Ablaufeinheit für erwärmtes Wasser und/oder ein Fühlerrohr. Vorzugsweise sind dadurch alle notwendigen Systemkomponenten in den Flanschdeckel integriert.

Bevorzugt ist der Flanschdeckel dazu vorgesehen, ein lösbares Befestigen der mindestens einen Systemkomponente zu ermöglichen. In weiterer Ausgestaltung des Warmwasserspeichers ist der Flanschdeckel zum lösbaren Befestigen der mindestens einen Systemkomponente derart ausgestaltet, dass die mindestens eine Systemkomponente zumindest teilweise in den Grundbehälter hineinragt. Dies bedeutet, dass der Flanschdeckel vor der eigentlichen Montage des Warmwasserspeichers bereits mit den notwendigen Systemkomponenten bestückt werden kann. Hierdurch ergibt sich dann eine schnelle Montage und eine einfache Demontage des Warmwasserspeichers, da nur mehr der Flanschdeckel mittels Bajonettverschluss mit dem Grundbehälter verbunden bzw. vom Grundbehälter gelöst werden muss.

In einer vorteilhaften Ausgestaltung weist der Warmwasserspeicher eine zwischen Grundbehälter und Flanschdeckel angeordnete Dichtungseinheit auf. Hierdurch ist in vorteilhafter Weise eine sichere axiale Dichtung des Warmwasserspeichers ermöglicht.

Anhand des in der Zeichnung dargestellten bevorzugten Ausführungsbeispiels wird die Erfindung nachfolgend näher beschrieben. Es zeigen:
- Fig. 1: einen Schnitt durch einen erfindungsgemäßen Warmwasserspeicher mit einem Grundbehälter und einem Flanschdeckel, wobei der Flanschdeckel über einen Bajonettverschluss mit dem Grundbehälter verbindbar ist.
- Fig. 2: eine Draufsicht auf den Warmwasserspeicher aus Fig. 1 mit dem Grundbehälter und dem Flanschdeckel in einer Schließstellung.

In den Figuren werden gleiche oder im Wesentlichen gleich bleibende Elemente mit den gleichen Bezugszeichen versehen.

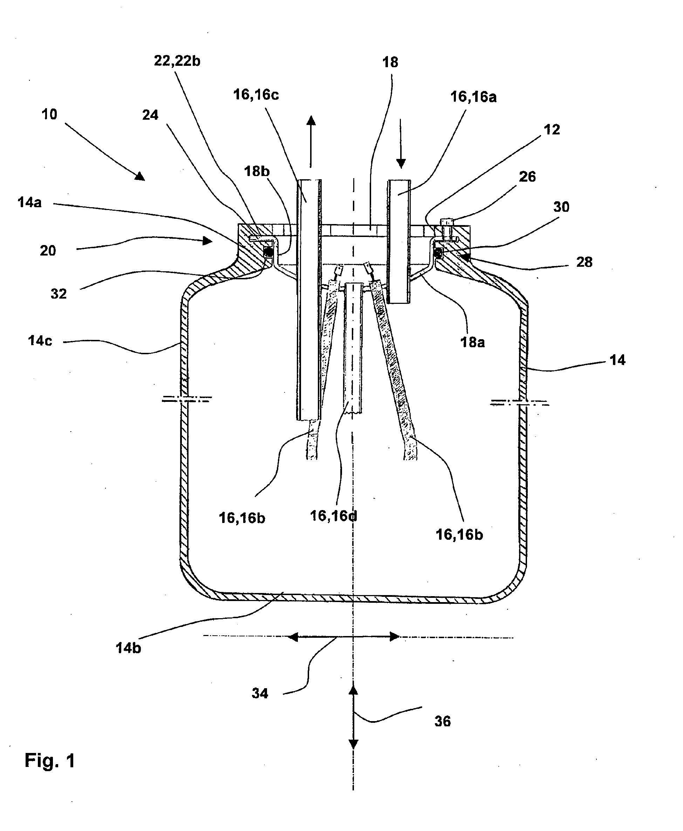

Figur 1 zeigt einen Schnitt durch einen erfindungsgemäßen Warmwasserspeicher 10 mit einem eine Öffnung 12 aufweisenden Grundbehälter 14 und einem Flanschdeckel 18, über den die Öffnung 12 des Grundbehälters 14 verschließbar ist.

Der Grundbehälter 14 umfasst einen Behälterboden 14b, einen an den Behälterboden 14b anschließenden Behältermantel 14c und eine dem Behälterboden 14b gegenüberliegende Öffnung 12. Im vorliegenden Ausführungsbeispiel ist der Grundbehälter 14 vorzugsweise zylindrisch ausgebildet und bildet im Bereich der Öffnung 12 einen so genannten Behälterhals 14a aus, dessen Außendurchmesser geringer ist als der Außendurchmesser des Behältermantels 14c des Grundbehälters 14. Vorzugsweise weist der Behälterhals 14a des Grundbehälters 14 eine dickere Wandstärke aus als der Behältermantel 14c des Grundbehälters 14.

Im vorliegenden Ausführungsbeispiel ist der Flanschdeckel 18 vorzugsweise topfartig ausgebildet und weist einen nach außen gewölbten Deckelboden 18a und einen an den Deckelboden 18a anschließenden Deckelmantel 18b auf.

Um einen Warmwasserspeicher 10 bereitzustellen, der bei einem einfachen und kostengünstigen Aufbau eine einfache Montage oder Demontage des Warmwasserspeichers 10 ermöglicht, ist erfindungsgemäß vorgesehen, dass der Flanschdeckel 18 über einen Bajonettverschluss 20 mit dem Grundbehälter 14 verbindbar ist.

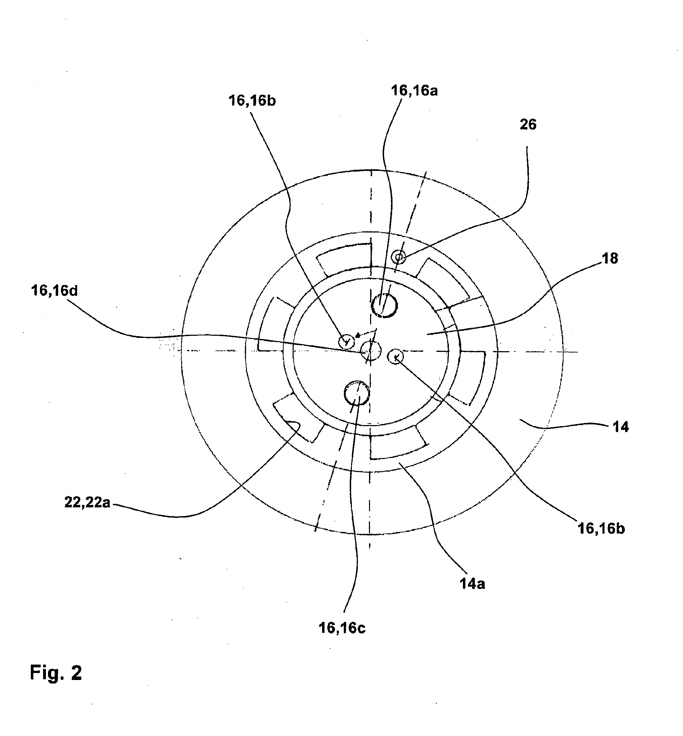

Zur Ausbildung des Bajonettverschlusses 20 weist gemäß Figuren 1 und 2 der Behälterhals 14a des Grundbehälters 14 Aussparungen 22 und der Flanschdeckel 18 Vorsprünge 24 auf, wobei zur Verbindung des Flanschdeckels 18 mit dem Grundbehälter 14 die Vorsprünge 24 des Flanschdeckels 18 in die Aussparungen 22 des Grundbehälters 14 einführbar sind.

Im vorliegenden Ausführungen handelt es sich bei den Aussparungen 22 des Behälterhalses 14a um nach oben, d.h. zum freien Ende des Behälterhalses 14a hin offene Ausbrüche 22a, die nach unten in eine zumindest teilweise am Innenumfang des Behälterhalses 14a umlaufende Nut 22b münden. Des Weiteren handelt es sich im vorliegenden Ausführungsbeispiel bei den am Flanschdeckel 18 vorgesehenen Vorsprüngen um sich in radialer Richtung 34 nach außen erstreckende Nasen 24, die sich an den Deckelmantel 18b anschließen.

Zur Verbindung des Flanschdeckels 18 mit dem Grundbehälter 14 werden die Nasen 24 des Flanschdeckels 18 in die Ausbrüche 22a des Behälterhalses 14a eingeführt, nach unten, d.h. in axialer Richtung 36 zum Behälterboden 14b des Grundbehälters 14 geführt, bis die Nasen 24 in der Nut 22b des Behälterhalses 14a aufgenommen sind. Bei Drehung des Flanschdeckels 18 verschieben sich die Nasen 24 in der Nut 22b von den Ausbrüchen 22a weg, wie in Fig. 2 dargestellt, und der Flanschdeckel ist somit gegen axiales Herausfallen gesichert.

Um den Flanschdeckel 18 am Grundbehälter 14 nun gegen eine unbeabsichtigte Drehung und eventuelles axiales Herausfallen zu sichern, ist eine Arretiervorrichtung 26 vorgesehen. Im vorliegenden Ausführungsbeispiel ist die Arretiervorrichtung 26 als Schraube ausgeführt, die in den Behälterhals 14a und den Flanschdeckel 18 vorzugsweise in axialer Richtung 36 einschraubbar ist.

Der Flanschdeckel 18 nimmt zumindest teilweise mindestens eine Systemkomponente 16 des Warmwasserspeichers 10 auf. Im vorliegenden Ausführungsbeispiel nimmt der Flanschdeckel 18 mehrere Systemkomponenten 16 des Warmwasserspeichers 10 auf, nämlich eine Zulaufeinheit 16a für zu erwärmendes Wasser, eine Heizeinrichtung 16b, eine Ablaufeinheit 16c für erwärmtes Wasser und ein Fühlerrohr 16d. Vorzugsweise ist die Zulaufeinheit 16a als Einströmrohr und die Ablaufeinheit 16c als Ausströmrohr ausgeführt.

Der Flanschdeckel 18 ist in vorteilhafter Weise dazu vorgesehen, ein lösbares Befestigen der Systemkomponenten 16 zu ermöglichen. Der Flanschdeckel 18 ist zu diesem lösbaren Befestigen der Systemkomponenten 16 derart ausgestaltet, dass die Systemkomponenten 16 zumindest teilweise in den Grundbehälter 14 hineinragen.

Zur axialen Dichtung des Warmwasserspeichers 10 ist zwischen Grundbehälter 14 und Flanschdeckel 18 eine Dichtungseinheit 28 angeordnet. Im vorliegenden Ausführungsbeispiel ist die Dichtungseinheit 28 als Dichtungsring 30 ausgeführt, welcher in eine in dem Behälterhals 14a des Grundbehälters 14 verlaufende Umlaufnut 32 einlegbar ist.

Aus Gründen der Korrosionsbeständigkeit besteht der Grundbehälter 14 aus Kunststoff und der Flanschdeckel 18 aus Edelstahl.

### Bezugszeichen liste

- 10: Warmwasserspeicher
- 12: Öffnung
- 14: Grundbehälter
- 14a: Behälterhals
- 14b: Behälterboden
- 14c: Behältermantel
- 16: Systemkomponente
- 16a: Zulaufeinheit für zu erwärmendes Wasser
- 16b: Heizeinrichtung
- 16c: Ablaufeinheit für erwärmtes Wasser
- 16d: Fühlerrohr
- 18: Flanschdeckel
- 18a: Deckelboden
- 18b: Deckelmantel
- 20: Bajonettverschluss
- 22: Aussparungen
- 22a: Ausbrüche
- 22b: Nut
- 24: Vorsprünge (Nasen)
- 26: Arretiereinrichtung
- 28: Dichtungseinheit
- 30: Dichtungsring
- 32: Umlaufnut
- 34: radiale Richtung
- 36: axiale Richtung

## Patentansprüche

1. Warmwasserspeicher (10) mit einem eine Öffnung (12) aufweisenden Grundbehälter (14) und einem mindestens eine Systemkomponente (16) zumindest teilweise aufnehmenden Stahlflanschdeckel (18), über den die Öffnung (12) des Grundbehälters (14) verschließbar ist, wobei der Flanschdeckel (18) über einen Bajonettverschluss (20) mit dem Grundbehälter (14) verbindbar ist, **dadurch gekennzeichnet, dass** der Stahlflanschdeckel ein Edelstahlflanschdeckel ist, und der Grundbehälter (14) aus Kunststoff besteht.

2. Warmwasserspeicher nach Anspruch 1, **dadurch gekennzeichnet, dass** zur Ausbildung des Bajonettverschlusses (20) der Grundbehälter (14) einen Behälterhals (14a) mit Aussparungen (22) und der Flanschdeckel (18) Vorsprünge (24) aufweist, wobei die Vorsprünge (24) des Flanschdeckels (18) in die Aussparungen (22) des Grundbehälters (14) einführbar sind.

3. Warmwasserspeicher nach Anspruch 1 oder 2, **gekennzeichnet durch** eine Arretiereinrichtung (26), welche dazu vorgesehen ist, den Flanschdeckel (18) am Grundbehälter (14) gegen Drehen zu sichern.

4. Warmwasserspeicher nach Anspruch 2 oder 3, **dadurch gekennzeichnet, dass** es sich bei den Aussparungen (22) des Behälterhalses (14a) um nach oben offene Ausbrüche (22a) handelt, welche in eine zumindest teilweise am Innenumfang des Behälterhalses (14a) umlaufende Nut (22b) münden.

5. Warmwasserspeicher nach Anspruch 2 bis 4, **dadurch gekennzeichnet, dass** es sich bei den am Flanschdeckel (18) vorgesehenen Vorsprünge um sich radial nach außen erstreckende Nasen (24) handelt.

6. Warmwasserspeicher nach einem der vorhergehenden Ansprüche, **dadurch gekennzeichnet, dass** es sich bei der mindestens einen Systemkomponente (16) um eine Zulaufeinheit (16a) für zu erwärmendes Wasser und/oder eine Heizeinrichtung (16b) und/oder eine Ablaufeinheit (16c) für erwärmtes Wasser und/oder ein Fühlerrohr (16d) handelt.

7. Warmwasserspeicher nach einem der vorhergehenden Ansprüche, **dadurch gekennzeichnet, dass** der Flanschdeckel (18) dazu vorgesehen ist, ein lösbares Befestigen der mindestens einen Systemkomponente (16) zu ermöglichen.

8. Warmwasserspeicher nach einem der vorhergehenden Ansprüche, **dadurch gekennzeichnet, dass** der Flanschdeckel (18) zum lösbaren Befestigen der mindestens einen Systemkomponente (16) derart ausgestaltet ist, dass die mindestens eine Systemkomponente (16) zumindest teilweise in den Grundbehälter (14) hineinragt.

9. Warmwasserspeicher nach einem der vorhergehenden Ansprüche, **gekennzeichnet durch** eine zwischen Grundbehälter (14) und Flanschdeckel (18) angeordnete Dichtungseinheit (28, 30, 32).

## Claims

1. Hot water tank (10) having a basic container (14) featuring an opening (12) and a steel flanged cover (18) at least partially accommodating at least one system component (16), by way of which flanged cover (18) the opening (12) of the basic container (14) can be closed, wherein the flanged cover (18) can be connected to the basic container (14) by way of a bayonet lock (20), **characterised in that** the steel flanged cover is a stainless steel flanged cover and the basic container (14) is made of plastic.

2. Hot water tank according to claim 1, **characterised in that** to configure the bayonet lock (20) the basic container (14) features a container neck (14a) with cutouts (22) and the flanged cover (18) features projections (24), it being possible for the projections (24) of the flanged cover (18) to be inserted into the cutouts (22) of the basic container (14).

3. Hot water tank according to claim 1 or 2, **characterised by** a catch facility (26) which is provided to secure the flanged cover (18) on the basic container (14) in such a manner that it cannot be rotated.

4. Hot water tank according to claim 2 or 3, **characterised in that** the cutouts (22) of the container neck (14a) are recesses (22a) that are open at the top and open into a groove (22b) that runs at least partially around the inner periphery of the container neck (14a).

5. Hot water tank according to claim 2 to 4, **characterised in that** the projections provided on the flanged cover (18) are lugs (24) that extend radially outward.

6. Hot water tank according to one of the preceding claims, **characterised in that** the at least one system component (16) is an inlet unit (16a) for water to be heated and/or a heating facility (16b) and/or a discharge unit (16c) for heated water and/or a sensor tube.

7. Hot water tank according to one of the preceding claims, **characterised in that** the flanged cover (18) is provided to allow detachable fastening of the at least one system component (16).

8. Hot water tank according to one of the preceding claims, **characterised in that**, for the detachable fastening of the at least one system component (16), the flanged cover (18) is embodied in such a manner that the at least one system component (16) projects at least partially into the basic container (14).

9. Hot water tank according to one of the preceding claims, **characterised by** a sealing unit (28, 30, 32) disposed between the basic container (14) and the flanged cover (18).

## Revendications

1. Chauffe-eau à accumulation (10) comprenant un réservoir de base (14) présentant une ouverture (12) et comprenant un couvercle à bride en acier (18) logeant au moins en partie au moins un composant de système (16), par l'intermédiaire duquel couvercle l'ouverture (12) du réservoir de base (14) est fermable, le couvercle à bride (18) étant raccordable au réservoir de base (14) par l'intermédiaire d'une fermeture à baïonnette (20), **caractérisé en ce que** le couvercle à bride en acier est un couvercle à bride en acier inoxydable et **en ce que** le réservoir de base (14) est constitué de matière plastique.

2. Chauffe-eau à accumulation selon la revendication 1, **caractérisé en ce que** pour la réalisation de la fermeture à baïonnette (20), le réservoir de base (14) présente un col de réservoir (14a) muni d'évidements (22) et **en ce que** le couvercle à bride (18) présente des saillies (24), les saillies (24) du couvercle à bride (18) étant insérables dans les évidements (22) du réservoir de base (14).

3. Chauffe-eau à accumulation selon la revendication 1 ou 2, **caractérisé par** un dispositif de blocage (26) qui est ménagé pour bloquer le couvercle à bride (18) sur le réservoir de base (14) en l'empêchant de tourner.

4. Chauffe-eau à accumulation selon la revendication 2 ou 3, **caractérisé en ce que** les évidements (22) du col de réservoir (14a) sont des percements (22a) ouverts vers le haut, lesquels débouchent dans une rainure (22b) circulaire au moins en partie sur la circonférence intérieure du col de réservoir (14a).

5. Chauffe-eau à accumulation selon les revendications 2 à 4, **caractérisé en ce que** les saillies ménagées sur le couvercle à bride (18) sont des ergots (24) s'étendant radialement vers l'extérieur.

6. Chauffe-eau à accumulation selon l'une quelconque des revendications précédentes, **caractérisé en ce que** l'au moins un composant de système (16) est une unité d'arrivée (16a) pour l'eau à échauffer et/ou un dispositif de chauffage (16b) et/ou une unité d'évacuation (16c) pour l'eau échauffée et/ou un tube-sonde (16d).

7. Chauffe-eau à accumulation selon l'une quelconque des revendications précédentes, **caractérisé en ce que** le couvercle à bride (18) est ménagé pour permettre une fixation amovible de l'au moins un composant de système (16).

8. Chauffe-eau à accumulation selon l'une quelconque des revendications précédentes, **caractérisé en ce que** le couvercle à bride (18) destiné à la fixation amovible de l'au moins un système de composant (16) est réalisé de manière à ce que l'au moins un composant de système (16) pénètre au moins en partie dans le réservoir de base (14).

9. Chauffe-eau à accumulation selon l'une quelconque des revendications précédentes, **caractérisé par** une unité d'étanchéité (28, 30, 32) disposée entre le réservoir de base (14) et le couvercle à bride (18).
